**Europäisches Patentamt**

**European Patent Office**

**Office européen des brevets**

(11) Numéro de publication: **0 196 936 B1**

# (12) FASCICULE DE BREVET EUROPEEN

(45) Date de publication du fascicule du brevet:
20.06.90

(21) Numéro de dépôt: 86400412.2

(22) Date de dépôt: 26.02.86

(51) Int. Cl.⁵: **H04M 11/08, H04L 12/26**

(54) Appareil de contrôle automatique rapide notamment pour terminaux annuaires téléphoniques.

(30) Priorité: **05.03.85 FR 8503207**

(43) Date de publication de la demande:
**08.10.86 Bulletin 86/41**

(45) Mention de la délivrance du brevet:
**20.06.90 Bulletin 90/25**

(84) Etats contractants désignés:
**BE CH DE GB IT LI**

(56) Documents cités:
**FR-A- 2 530 843**
**FR-A- 2 564 621**

**TELCOM REPORT;**
**vol. 7, no. 3, mai-juin 1984, pages 186-189, Passau, DE;**
**C. CHAILLIE et al.: "Servicegeräte für den**
**Teilnehmeranschluss in Text- und Datennetzen"**
**ELECTRONIC DESIGN,**
**vol. 31, no. 3, février 1983, pages 91-99, Waseca, MN,**
**Denville, NJ, US; R. ALLAN: "Data-comm testers take**
**to the field"**

(73) Titulaire: **Rault, Michel, rue de Hingard Brelevenez,**
**F-22300 Lannion(FR)**
Titulaire: **Heno, Claude, 99, rue de Toul ar Lann,**
**F-22700 Perros Guirec(FR)**

(72) Inventeur: **Rault, Michel, rue de Hingard Brelevenez,**
**F-22300 Lannion(FR)**
Inventeur: **Heno, Claude, 99, rue de Toul ar Lann,**
**F-22700 Perros Guirec(FR)**

(74) Mandataire: **Martinet & Lapoux, 62, rue des Mathurins,**
**F-75008 Paris(FR)**

## Description

La présente invention concerne un appareil autonome portatif de contrôle automatique rapide pour teminaux de transmission de données, tels que terminaux vidéotex du genre "MINITEL".

Les terminaux vidéotex, tels que ceux utilisés pour accéder à des annuaires électroniques, comportent un modem connectable à une ligne du réseau téléphonique par une prise téléphonique, une unité de traitement de données connectée au modem, un écran de visualisation connecté à l'unité de traitement et un clavier de commande connecté à ladite unité. Ils comportent en outre une prise dite "péri-informatique" qui permet le raccordement de divers dispositifs périphériques numériques.

De nombreux terminaux vidéotex sont déjà installés chez les abonnés au réseau téléphonique et leur nombre va encore croître dans des proportions considérables. Il devient donc nécessaire d'équiper les services de maintenance, de moyens de diagnostic rapide de panne qui permettent aux techniciens de vérifier instantanément le fonctionnement d'un terminal.

On connaît déjà, notamment par la demande de brevet français FR-A 2 564 621 du 22.11.1985, intitulée "Equipement de maintenance et de réparation pour terminaux de données", un appareil de contrôle pour terminaux vidéotex qui est portatif et logeable dans une valise du type "attaché-case". Cet appareil se connecte à la prise téléphonique de l'installation téléphonique d'abonné, à la prise téléphonique du terminal vidéotex, et à la prise péri-informatique de ce même terminal. En particulier, il est relié, par l'intermédiaire de la prise de l'installation téléphonique, à un serveur qui permet d'entrer en relation avec un logiciel d'assistance. Cet appareil connu constitue un banc électronique de réparation qui permet à un technicien de disposer d'une assistance permanente et interactive pour le diagnostic des pannes et pour les procédures de contrôle et de réglage du terminal.

L'article de C. CHAILLIE et al. dans TELECOM REPORT, vol. 7, N° 4, mai-juin 1984, pages 186–189, Passau (DE), intitulé "Servicegeräte für den Teilnehmeranschluß in Text- und Datennetzen" propose des appareils de contrôle générant divers signaux de test et signaux simulant un fonctionnement normal pour vérifier le fonctionnement d'une liaison entre un terminal de données et le central de données et textes correspondant. En particulier, à la page 189, col. de droite, lignes 7–16 en référence à la Fig. 6, cet article suggère qu'un appareil de contrôle soit relié directement et seulement à la prise téléphonique d'un terminal télétex et simule des fonctions du central de données avec des états libre et occupé. Toutefois cet article ne décrit ni ne suggère la structure interne et le fonctionnement détaillé de l'appareil de contrôle, et ne concerne pas le contrôle d'un terminal vidéotex offrant une prise péri-informatique. .

Le but de l'invention est de fournir un appareil de contrôle pour terminal vidéotex qui permette à un opérateur chargé de la maintenance de se passer de l'assistance d'un serveur du réseau téléphonique et de contrôler le terminal vidéotex aussi bien par rapport à la prise téléphonique que par rapport à la prise péri-informatique. L'appareil contient son propre logiciel qui assure un contrôle automatique et interactif du terminal.

Plus précisément, l'appareil selon l'invention délivre des séquences d'instructions de contrôle de fonctionnement au terminal contrôlé. Si celui-ci est en bon état de marche, il doit répondre à chaque séquence d'instructions par un signal d'acquittement. Si l'appareil de contrôle ne reçoit pas ce signal, il délivre lui-même un signal d'alerte ou un message en correspondance avec la séquence d'instructions, message affiché sur l'écran du terminal ou sur un écran incorporé à l'appareil de contrôle.

Les avantages que confère l'invention sont :
- la simplicité d'utilisation : les interventions de l'opérateur consistent essentiellement à brancher l'appareil de contrôle au terminal et à les mettre sous tension ;
- l'automatisme : le contrôle démarre et s'effectue tout seul et un sous-ensemble défaillant dans le terminal est signalé ;
- l'autonomie : il n'y a ni branchement ni appel au réseau téléphonique ;
- enfin, la souplesse d'utilisation : l'adaptation aux divers types de terminaux peut être réalisée par échange d'un module enfichable qui constitue une mémoire morte de l'appareil contenant les séquences d'instructions, ou encore par simple commutation permettant de passer d'une zone de mémoire morte à une autre.

Conformément à l'invention, un appareil de contrôle pour terminaux de transmission de données est tel que défini dans la revendication 1.

Avantageusement :
- la mémoire morte est la mémoire de programmation d'un micro-calculateur qui délivre automatiquement les séquences d'instructions dans un ordre prédéterminé,
- l'unité de traitement comporte des moyens pour reconnaître chaque séquence d'acquittement que doit renvoyer le terminal en réponse à chaque séquence d'instructions et des moyens pour stopper le déroulement du programme en cas de non-réponse,
- ledit appareil comporte en outre des moyens pour transmettre un signal d'alerte lorsque le déroulement des instructions est arrêté,
- ces moyens d'émission de signal d'alerte sont des moyens pour afficher sur un écran incorporé audit appareil ou sur l'écran du terminal un message en correspondance avec la séquence d'instructions qui n'a pas donné lieu à l'émission du signal d'acquittement par le terminal contrôlé.

D'autres caractéristiques et avantages de l'invention apparaîtront plus clairement à la lecture de la description suivante d'un exemple de réalisation de l'appareil de contrôle selon l'invention en référence aux dessins annexés correspondants dans lesquels :

- la Fig. 1 montre des blocs-diagrammes fonctionnels de l'appareil de contrôle selon l'invention, et d'un terminal en cours de contrôle ;

- les Figs. 2A et 2B sont des algorithmes condensés illustrant l'éxécution de différentes phase du contrôle du terminal par l'appareil de contrôle de la Fig. 1; et

- la Fig. 3 est un tableau relatif aux signaux de sélection de mode, d'horloge et de canal qui sont mis en oeuvre dans les circuits dudit appareil.

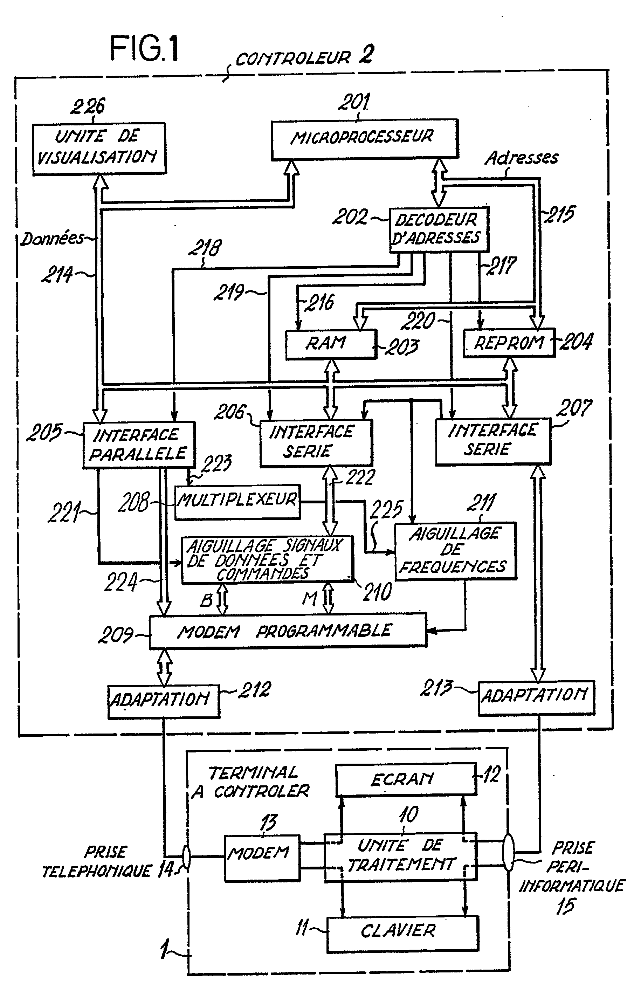

En référence à la Fig. 1, un terminal vidéotex du type MINITEL 1 à contrôle, comprend essentiellement une unité de traitement 10, un clavier 11, un écran 12, un modem 13, retournable ou non, et deux prises de liaison, savoir une prise téléphonique 14 et une prise péri-informatique 15.

On rappelle que, dans sa version actuelle, le terminal MINITEL communique avec des serveurs auxquels il est relié à travers le réseau téléphonique selon un mode de transmission asymétrique. Il reçoit des informations à une cadence de 1200 bauds et en émet à une cadence de 75 bauds. Cependant, ces cadences peuvent être permutées si le modem 13 est retournable. Quant à la cadence des échanges entre le terminal et des périphériques connectés par l'intermédiaire de la prise péri-informatique 15, elle est en principe de 1200 bauds lors de la mise sous tension, mais elle peut être facilement modifiée, soit au moyen du clavier 11, soit au moyen d'un périphérique. Enfin, la modulation respecte l'avis V23 du CCITT (Comité Consultatif International Télégraphique et Téléphonique), bien que l'on puisse également mettre en œuvre les recommandations de l'avis V21 du CCITT.

Ces rappels expliquent qu'un appareil de contrôle 2 exploite deux canaux, à savoir un canal principal (MAIN), utilisable à 300, 600 et 1200 bauds, et un canal auxiliaire (BACK) utilisable à 75 bauds. La modulation utilisée sera du type V23 car la modulation du type V21 ne permet pas l'usage du canal auxiliaire (BACK).

Pour alléger le texte de la présente description, on convient maintenant de dénommer tout simplement "terminal", le terminal 1 à contrôler et "contrôleur" l'appareil de contrôle 2 selon l'invention.

Toujours en référence à la Fig. 1, le contrôleur 2 comporte un microprocesseur 201, un décodeur d'adresses 202, une mémoire vive du type RAM 203, une mémoire morte d'instructions de préférence du type REPROM 204, une interface parallèle 205, deux interfaces série 206 et 207, un multiplexeur 208, et un modem programmable 209. Les éléments 201 à 209 sont constitués par des circuits intégrés commercialisés. Le contrôleur 2 comporte également un circuit de commande d'aiguillage de signaux de commandes et de données 210, un circuit de commande d'aiguillage de fréquences 211, et deux circuits d'adaptation 212 et 213.

Un bus de données 214 achemine des mots de données entre le microprocesseur 201, les mémoires 203 et 204 et les interfaces 205, 206 et 207. Un bus d'adresses 215 achemine des mots d'adresse entre le microprocesseur 201, le décodeur 202 et les mémoires 203 et 204. Le décodeur d'adresses 202 délivre des signaux de commande d'adressage à des entrées d'adressage des mémoires 203 et 204 et des interfaces 205, 206 et 207, via des liaisons 216, 217, 218, 219 et 220 respectivement.

Les circuits de commande d'aiguillage 210 et 211 sont des circuits de portes logiques. Le circuit 210 est commandé par l'interface parallèle 205 via une liaison 221 et délivre des signaux de commandes·et de données à l'interface série 206 et au modem 209 à travers des liaisons 222, et B,M. L'interface 205 délivre aussi des signaux de commande d'aiguillage au multiplexeur 208 et des signaux de sélection de mode au modem 209 respectivement à travers des liaisons 223 et 224. Quant au circuit de commande d'aiguillage de fréquences 211, il reçoit d'une sortie 225 du multiplexeur 208 des signaux qui permettent au circuit 211 de commander la sélection de fréquences d'horloge dans le modem 209.

La Fig. 1 montre également une unité de visualisation 226 connectée au bus de données 214 pour afficher des massages qui sont des invitations à presser certaines touches, ou des résultats de tests. L'unité 226 peut se révéler inutile dans la mesure où ces messages peuvent être envoyés via les prises 14 et 15 du terminal 1 pour être affichés sur l'écran 132 de celui-ci.

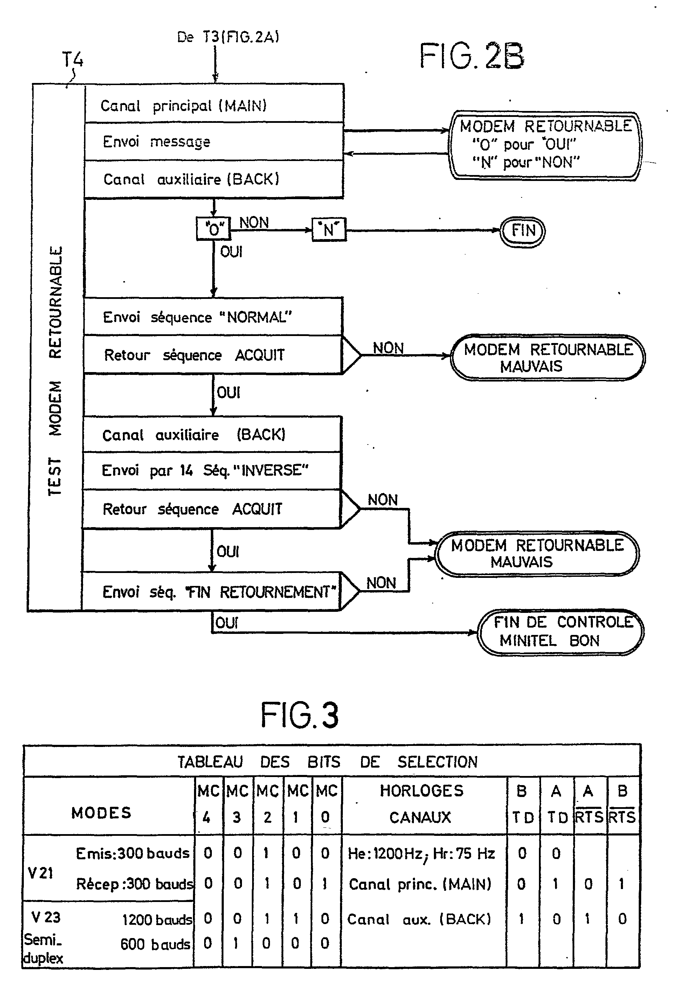

On considère maintenant le tableau de la Fig. 3. La partie de gauche est consacrée aux mots de sélection de mode délivrés par l'interface parallèle 205 (Fig. 1) à des entrées de commande correspondantes du modem programmable 209 via la liaison 224. On voit que cinq bits suffisent pour déterminer respectivement le fonctionnement en émission et en réception dans les modes V21 et V23. La partie de droite du tableau de la Fig. 3 indique la valeur des bits délivrés par le multiplexeur 208 au circuit d'aiguillage 211 et par le circuit 211 au modem 209 pour définir les fréquences d'horloge à l'émission et à la réception ainsi que le canal utilisé, savoir soit le canal principal MAIN transmis par la prise téléphonique 14 et le circuit d'adaptation 212, soit le canal auxiliaire BACK transmis par la prise péri-informatique 15 et le circuit d'adaptation 213.

Les repères qui figurent en tête des colonnes du tableau de la Fig. 3 sont ici donnés uniquement à titre d'exemple et se réfèrent aux entrées du modem programmable utilisé 209 qui est un circuit intégré du commerce du type AM7910 de "Advanced Micro. Devices".

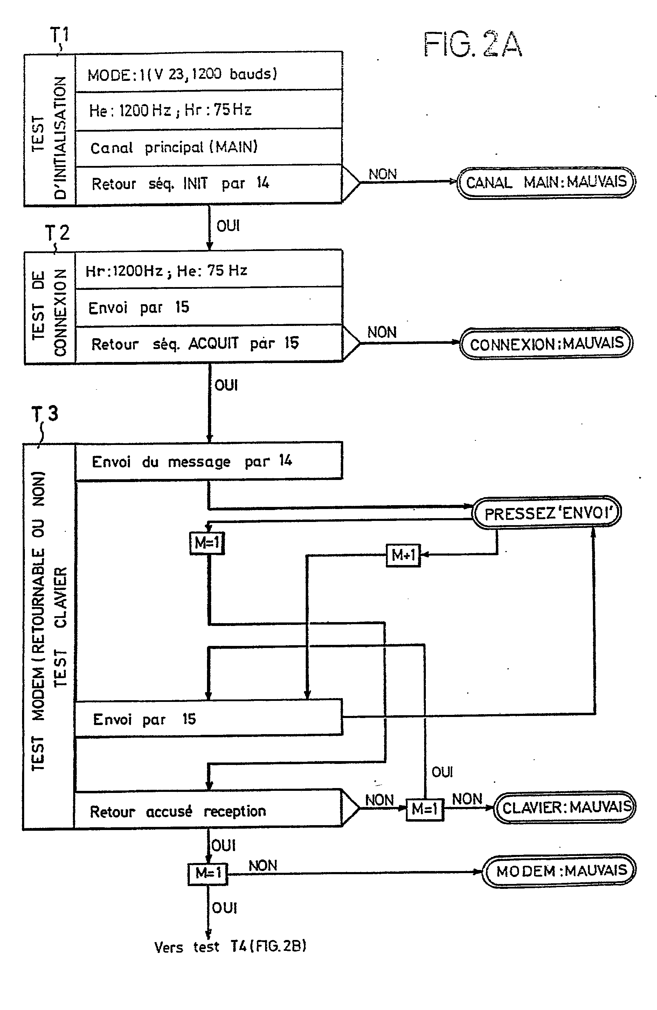

L'algorithme de contrôle commence à la Fig. 2A et se termine à la Fig. 2B. Il comprend quatre tests T1 à T4. Le test T1 (voir les rubriques de gauche) vérifie le déroulement d'une séquence d'initialisation correspondant à la mise sous tension du terminal 1, le test T2 vérifie le déroulement d'une séquence de connexion correspondant au branchement du terminal 1 sur le réseau, le test T3 vérifie le fonctionnement du modem 13 en transmission "normale" et le fonctionnement du clavier 11, et ceci dans les différents modes utilisés, et enfin le test T4 concerne plus spécialement le cas où le modem 13 est retournable, la vérification devant alors être faite en transmission "normale" et en transmission "inverse".

On rappelle que les différents paramètres, tels que mode, fréquence d'horloge et choix du canal, sont commandés par la valeur des bits délivrés aux entrées de commande du modem 209 (voir tableau de la Fig. 3).

On suppose enfin que le contrôleur 2 n'est pas doté d'une unité de visualisation 226 et que les messages sont affichés sur l'écran 12 du terminal 1.

Pour entamer la série de tests, un opérateur commence par vérifier que la mise sous tension du terminal 1 allume l'écran 12 de celui-ci. Si tel est le cas, l'opérateur effectue les branchements nécessaires entre le terminal et le contrôleur pour relier les prises 14 et 15 du terminal aux circuits 212 et 213 du contrôleur, et met le contrôleur 2 sous tension.

Le test d'initialisation T1 commence alors immédiatement. Le contrôleur 2 délivre au terminal 1, par la prise téléphonique 14, les signaux qui déterminent le fonctionnement en mode 1 : canal V23, cadence de transmission 1200 bauds, fréquence de l'horloge d'émission He = 1200 Hz, fréquence de l'horloge de réception Hr = 75 Hz, usage du canal MAIN. Si l'initialisation du terminal s'est effectuée correctement, le terminal doit renvoyer au contrôleur une séquence numérique qui annonce la bonne fin de l'opération.

On rappelle que les séquences d'accusé de réception, d'acquittement, etc.. délivrées par le terminal sont normalement destinées au réseau. Dans le cas du terminal MINITEL, ces séquences sont constituées par une suite de deux nombres, par exemple en hexadécimal, 13,53 ou 13,41, etc... On précise que dans l'algorithme ici décrit, le terme "envoi" définit la transmission dans le sens contrôleur vers terminal et le terme "retour" la transmission dans le sens terminal vers contrôleur.

Si la prise téléphonique 14 ne retourne pas au contrôleur 2 le signal de bonne fin, le contrôleur délivre au terminal un message tel que "CANAL MAIN MAUVAIS" qui est affiché sur l'écran 12 et l'essai est arrêté. Dans le cas contraire, le contrôle se poursuit par le test de connexion T2.

Le test de connexion T2 consistant à vérifier la bonne exécution de la séquence de connexion, comprend les phases suivantes :
- envoi de l'ordre de connexion par le contrôleur 2 via la prise péri-informatique 15, et
- retour de la séquence d'acquittement par le terminal via la même prise 15 vers l'interface 207.

Si la séquence d'acquittement n'est pas retournée, l'écran 12 affiche "CONNEXION : MAUVAIS" et le contrôle est terminé.

Dans le cas contraire, le test T3 commence par l'envoi, par l'intermédiaire de la prise téléphonique 14, du message "PRESSEZ TOUCHE ENVOI". Ce message est affiché sur l'écran 12. L'opérateur doit alors presser la touche "ENVOI" sur le clavier 11 du terminal. On rappelle que le mode 1 (V23,1200 bauds) a été sélectionné au départ du test T1. La séquence d'accusé de réception est retournée via la prise de péri-informatique 15.

Si la séquence d'accusé de réception est effectivement retournée et si le modem 13 fonctionne en mode 1, ce qui est effectivement le cas dans la phase considérée ici, le test est jugé satisfaisant et le test T4 est abordé. Si ladite séquence d'accusé de réception n'est pas retournée, le contrôleur 2 vérifie que l'on est bien dans le mode 1, puis affiche de nouveau sur l'écran 12 l'invitation à presser la touche 'Envoi par 15', commande le passage au mode suivant (M+1), puis attend de nouveau le retour de la séquence d'accusé de réception. Si celui-ci ne se produit pas, l'écran affiche "CLAVIER : MAUVAIS". Si par contre la séquence d'accusé de réception est retournée, l'écran 12 affiche "MODEM : MAUVAIS".

On aborde maintenant la description du test T4 (Fig. 2B) qui concerne des opérations de contrôle supplémentaires nécessaires si le modem 13 est retournable, et qui n'est abordé que si les tests précédents T1 à T3 sont satisfaisants.

Le contrôleur 2 adresse au terminal 1 par le canal principal (MAIN) le message suivant à afficher par l'écran :
"MODEM RETOURNABLE ? (TOUCHE O POUR OUI, N POUR NON)",
Si l'opérateur a pressé la touche 'N', le contrôleur délivre au terminal le message de fin de contrôle qui est affiché sur l'écran.

Si l'opérateur a pressé la touche 'O', le contrôleur 2 transmet la séquence de retournement dite "normale". La non-réception de la séquence d'acquittement provoque l'affichage sur l'écran 12 du terminal du message "MODEM RETOURNABLE : MAUVAIS" et le test s'arrête. Si la séquence d'acquittement est reçue, le contrôleur sélectionne le canal auxiliaire (BACK) et délivre la séquence de retournement 'Inverse' via la prise péri-informatique 15. La réception de la séquence d'acquittement provoque l'affichage du message "FIN DE CONTROLE. MINITEL : BON" et sa non-réception provoque l'affichage du message "MODEM RETOURNABLE : MAUVAIS". De toute façon le contrôle est terminé.

## Revendications

1. Appareil pour contrôler un terminal de transmissin de données,
ledit terminal (1) comprenant une prise téléphonique (14) pour raccordement à une ligne téléphonique, une prise péri-informatique (15) pour raccordement à un dispositif périphérique numérique, un premier modem (13) relié à la prise téléphonique pour transmettre et recevoir des signaux modulés en fréquence, et une unité de traitement de données (10) ayant un écran de visualisation (12) et un clavier (11), ladite unité de traitement de données étant interconnectée au premier modem (13) et à la prise péri-informatique (15) pour traiter et commuter des signaux numériques entre le premier modem et la prise péri-informatique et entre l'écran et le clavier,
ledit appareil (2) comprenant
des moyens (206, 209 à 212) incluant un second modem (209) relié à ladite prise téléphonique (14) du terminal (1) pour convertir des premiers signaux de contrôle numériques en des premiers signaux modulés en fréquence destinés à être transmis au premier modem (13), et pour convertir des seconds signaux modulés en fréquence qui sont à transmettre par le premier modem (13) en réponse à des signaux numériques prédéterminés reçus et traités dans l'unité de traitement (10), en des premiers signaux de réponse numériques,

des moyens numériques (207, 213) connectés à la prise péri-informatique (15) du terminal (1) pour transmettre des seconds signaux de contrôle numériques à ladite unité de traitement (10) et pour recevoir des seconds signaux de réponse numériques en réponse à des signaux numériques prédéterminés reçus et traités dans ladite unité de traitement (10), et

des moyens de traitement de données (201, 202, 203), incluant une mémoire morte (204) d'instructions de contrôle, pour établir lesdits premiers et seconds signaux de contrôle numériques et pour vérifier lesdits premiers et seconds signaux de réponse numériques, lesdits signaux de contrôle numériques étant établis selon des instructions de contrôle dans ladite mémoire (204).

2. Appareil conforme à la revendication 1, caractérisé en ce que les moyens de traitement de données (201, 202, 203) fournissent un message numérique particulier et arrêtent le déroulement des instructions lorsque l'un desdits premiers et seconds signaux de réponse est erroné, et en ce que ledit message particulier est transmis à travers les second et premier modem (209, 13) à ladite unité de traitement (10) pour être affiché sur ledit écran (12) du terminal (1).

**Claims**

1. Test apparatus for a date transmission terminal, said terminal (1) comprising a telephone plug (14) for connection with a telephone line, a peripheral plug (15) for the connection to a digital peripheral device, a first modem (13) connected to the telephone plug for transmitting and receiving frequency modulated signals, and a data processing unit (10) having a display screen (12) and a keyboard (11), said data processing unit being interconnected to the first modem (13) and to the peripheral plug (15) for processing and switching digital signals between the first modem and the peripheral plug and between the screen and the keyboard,

said apparatus (2) comprising

means (206, 209 to 212) including a second modem (209) connected to said telephone plug (14) of the terminal (1) for converting first digital test signals in first frequency modulated signals designed to be transmitted to the first modem (13), and for converting second frequency modulate signals which are to be transmitted by the first modem (13) responsive to predetermined digital signals received and processed in the processing unit (10), into first digital response signals,

digital means (207, 213) connected to the peripheral plug (15) of the terminal (1) for transmitting second digital test signals to said processing unit (10) and for receiving second digital response signals responsive to predetermined digital signals received and processed in said processing unit (10), and

data processing means (201, 202, 203), including a test instruction read-only memory (204), for deriving said first and second digital test signals and for checking said first and second digital response signals, said digital test signals being derived in accordance with test instructions in said memory (204).

2. Apparatus according to claim 1, characterized in that the data processing means (201, 202, 203) supply a particular digital message and stop the instruction performance when one of said first and second response signals is erroneous, and in that said particular message is transmitted through the second and first modems (209, 13) to said processing unit (10) to be displayed on said screen (12) of the terminal (1).

**Patentansprüche**

1. Apparat zum Steuern eines Datenübertragungsterminals,

wobei das Terminal (1) einen Telefonanschluß (14) zur Verbindung mit einem Telefonnetz, einen Peripherieanschluß (15) zur Verbindung mit einer externen numerischen Einrichtung, einem ersten, an den Telefonanschluß zur Übertragung und zum Empfangen frequenzmodulierter Signale angeschlossenem Modem (13) und eine Einheit zur Verarbeitung der Daten (10) mit einem Bildschirm (12) und einer Tastatur (11) aufweist, wobei die Datenübertragungseinheit mit dem ersten Modem (13) und dem Peripherieanschluß zur Bearbeitung und Verrechnung der numerischen Signale zwischen dem ersten Modem und dem Peripherieanschluß und zwischen dem Bildschirm und der Tastatur verbunden ist,

wobei der Apparat aufweist

Mittel (206, 209 bis 212) mit einem zweiten, mit dem Telefonanschluß des Terminals (1) zum Wandeln der ersten numerischen Steuersignale in erste frequenzmodulierte, zur Übertragung zu dem ersten Modem (13) bestimmter Signale verbundenen Modem (209), und zum Wandeln der zweiten frequenzmodulierten Signale, die von dem ersten Modem (13) in Antwort auf die numerischen Signale in der Übertragungseinheit (10) vorgegeben empfangen und bearbeitet sind, in erste numerische Antwortsignale, numerische Mittel (207, 213), die mit dem Peripherieanschluß (15) des Terminals (1) verbunden sind zur Übertragung der zweiten numerischen Steuersignale zu der Datenverarbeitungseinheit (10) und zum Empfangen der zweiten numerischen Antwortsignale, die von der Verarbeitungseinheit (10) vorbestimmt empfangen und verarbeitet sind, und

Datenübertragungsmittel (201, 202, 203) mit einem Steuerbefehlsspeicher (204) zum Erstellen der ersten und zweiten numerischen Steuersignale und zum Verifizieren der ersten und zweiten numerischen Antwortsignale, wobei die numerischen Steuersignale den Steuerbefehlen des Speichers (204) entsprechend erstellt sind.

2. Apparat nach Anspruch 1, dadurch gekennzeichnet, daß die Datenverarbeitungsmittel (201, 202, 203) eine bestimmte numerische Nachricht liefern und die Ausführung des Befehls unterbrechen, wenn die ersten und zweiten Antwortsignale fehlerhaft sind und die bestimmte Nachricht über das zweite und erste Modem (209, 13) (10) zur Darstellung auf dem Bildschirm des Terminals zu der Verarbeitungseinheit übertragen wird.

**EP 0 196 936 B1**

FIG.1

CONTROLEUR **2**

226 UNITE DE VISUALISATION

201 MICROPROCESSEUR

Adresses

202 DECODEUR D'ADRESSES

215

Données

214

218

219

216

217

220

203 RAM

204 REPROM

205 INTERFACE PARALLELE

206 INTERFACE SERIE

207 INTERFACE SERIE

223

208 MULTIPLEXEUR

222

221

225

211 AIGUILLAGE DE FREQUENCES

224 AIGUILLAGE SIGNAUX DE DONNEES ET COMMANDES

210

B

M

209 MODEM PROGRAMMABLE

ADAPTATION 212

213 ADAPTATION

TERMINAL A CONTROLER

ECRAN 12

13

10

PRISE TELEPHONIQUE 14

MODEM

UNITE DE TRAITEMENT

PRISE PERI-INFORMATIQUE 15

11 CLAVIER

1

# FIG. 2A

**T1**

| TEST D'INITIALISATION | MODE : 1 ( V 23, 1200 bauds) |
|---|---|
| | He : 1200 Hz ; Hr : 75 Hz |
| | Canal principal (MAIN) |
| | Retour séq. INIT par 14 |

NON → ( CANAL MAIN : MAUVAIS )

OUI

**T2**

| TEST DE CONNEXION | Hr : 1200Hz ; He : 75 Hz |
|---|---|
| | Envoi par 15 |
| | Retour séq. ACQUIT par 15 |

NON → ( CONNEXION : MAUVAIS )

OUI

**T3**

TEST MODEM (RETOURNABLE OU NON) — TEST CLAVIER

Envoi du message par 14

PRESSEZ 'ENVOI'

M=1

M+1

Envoi par 15

Retour accusé reception

OUI

NON   M=1   NON → ( CLAVIER : MAUVAIS )

OUI

M=1   NON → ( MODEM : MAUVAIS )

OUI

Vers test T4 (FIG. 2B)

De T3(FIG.2A)

T4

## FIG.2B

TEST MODEM RETOURNABLE

| Canal principal (MAIN) |
| Envoi message |
| Canal auxiliaire (BACK) |

MODEM RETOURNABLE
"O" pour "OUI"
"N" pour "NON"

"O" — NON — "N" — FIN

OUI

| Envoi séquence "NORMAL" |
| Retour séquence ACQUIT | NON → MODEM RETOURNABLE MAUVAIS |

OUI

| Canal auxiliaire (BACK) |
| Envoi par 14 Séq. "INVERSE" |
| Retour séquence ACQUIT | NON |

OUI

MODEM RETOURNABLE
MAUVAIS

| Envoi séq. "FIN RETOURNEMENT" | NON |

OUI

FIN DE CONTROLE
MINITEL BON

## FIG.3

| TABLEAU DES BITS DE SELECTION | | | | | | | | | | |
|---|---|---|---|---|---|---|---|---|---|---|
| MODES | MC 4 | MC 3 | MC 2 | MC 1 | MC 0 | HORLOGES CANAUX | B TD | A TD | A $\overline{RTS}$ | B $\overline{RTS}$ |
| V 21 Emis:300 bauds | 0 | 0 | 1 | 0 | 0 | He:1200Hz; Hr:75 Hz | 0 | 0 | | |
| V 21 Récep:300 bauds | 0 | 0 | 1 | 0 | 1 | Canal princ. (MAIN) | 0 | 1 | 0 | 1 |
| V 23 1200 bauds | 0 | 0 | 1 | 1 | 0 | Canal aux. (BACK) | 1 | 0 | 1 | 0 |
| Semi_ duplex 600 bauds | 0 | 1 | 0 | 0 | 0 | | | | | |